# EUROPÄISCHE PATENTANMELDUNG

(11) **EP 1 911 639 A1**
(43) Veröffentlichungstag der Anmeldung: **16.04.2008**
(21) Anmeldenummer: 07015330.9
(22) Anmeldetag: 04.08.2007
(51) Int. Cl.: B60R 25/00, E05B 19/00, E05B 19/22, G02B 5/30, G02F 1/1335, G02F 1/167, G07C 9/00, G09G 3/34

(54) **Kraftfahrzeugschlüssel**

(30) Priorität: 10.10.2006 US 850491 P
(71) Anmelder: Volkswagen Aktiengesellschaft, 38436 Wolfsburg (DE); AUDI AKTIENGESELLSCHAFT, 85045 Ingolstadt (DE)
(72) Erfinder: Bennett, Ian, 94028 Portola Valley, CA (US); Rosario, Daniel, 95060 Santa Cruz, CA (US); Chen, Pao Hsu, 95035 Milpitas, CA (US); Srinivasan, Venkat, 94085 Sunnyvale, CA (US); Stoschek, Arne, 94303 Palo Alto (US)

(57) **Zusammenfassung**

Die Erfindung betrifft einen Kraftfahrzeugschlüssel (1) zum Ver- oder Entriegeln einer Tür (3) eines Kraftfahrzeuges (2) oder zum Betrieb des Kraftfahrzeuges, wobei der Kraftfahrzeugschlüssel eine Displayanordnung (10) zur Darstellung einer das Kraftfahrzeug betreffenden Information oder zur Darstellung der Funktion eines Bedienelementes (13,14) des Kraftfahrzeugschlüssels umfasst, und wobei die Displayanordnung zumindest ein MEMS-Display, ein cholesterisches Display und/oder ein elektrophoretisches Display umfasst.

## Beschreibung

Die Erfindung betrifft einen Kraftfahrzeugschlüssel zum Ver- und/oder Entriegeln einer Tür eines Kraftfahrzeuges und/oder zum Betrieb des Kraftfahrzeuges mit einer Displayanordnung zur Darstellung einer das Kraftfahrzeug betreffenden Information.

Ein derartiger Kraftfahrzeugschlüssel wurde für ein Kraftfahrzeug der Marke AUDl entwickelt.

Es ist eine Aufgabe der Erfindung, die Ablesbarkeit von auf einem Kraftfahrzeugschlüssel dargestellten Informationen zu verbessern. Es ist eine weitere Aufgabe der Erfindung möglichst viele Informationen auf einem Kraftfahrzeugschlüssel darzustellen.

Vorgenannte Aufgabe wird durch einen Kraftfahrzeugschlüssel zum Ver- und/oder Entriegeln einer Tür eines Kraftfahrzeuges und/oder zum Betrieb des Kraftfahrzeuges gelöst, wobei der Kraftfahrzeugschlüssel eine Displayanordnung zur Darstellung einer das Kraftfahrzeug betreffenden Information und/oder zur Darstellung der Funktion eines Bedienelementes des Kraftfahrzeugschlüssels umfasst, und wobei die Displayanordnung zumindest ein bistabiles MEMS-Display, ein cholesterisches Display (engl: cholesteric display) und/oder ein electrophoretisches Display (engl: electrophoretic display) umfasst. Auf diese Weise kann aufgrund des äußerst geringen bzw. nicht vorhandenen Energiebedarfs dieser Displays bei einer statischen Anzeige von Informationen ein besonders großes Display verwendet werden, so dass die dargestellten Informationen gut ablesbar sind bzw. so dass viele Informationen darstellbar sind.

Das Kraftfahrzeug betreffende Informationen im Sinne der Erfindung können insbesondere, die Tankfüllung, der Schließzustand des Kraftfahrzeuges, die verbleibende Reichweite des Kraftfahrzeuges, der Status einer Alarmanlage des Kraftfahrzeuges, der Standort des Kraftfahrzeuges (absolut oder in Relation zum Schlüssel), das Nummernschild des Kraftfahrzeuges, der Hersteller des Kraftfahrzeuges, das Modell des Kraftfahrzeuges o.ä. sein.

Ein bistabiles MEMS-Display im vorgenannten Sinne soll insbesondere kein in Verbindung mit einer aktiven Lichtquelle zu verwendendes MEMS-Display sein, wie es z.B. in dem unter der Internetadresse

www.ee.washington.edu/research/mems/publications/2003/conferences/iwpsd-kwang-03.pdf hinterlegten Artikel "Micro-optical Components for a MEMS integrated Display" offenbart ist. Ein geeignetes bistabiles MEMS-Display ist z.B. in der unter der Internetadresse
www.utdallas.edu/~jblee/EE7382/31%20MEMS%20displays.pdf
hinterlegten Präsentation "EE 7382 Introduction to MEMS" auf Seite 22 (incorporated by refe-rence) offenbart. Geeignete bistabile MEMS-Displays können z.B. von der Firma Qualcomm bezogen werden (vgl. z.B. die internetadressen www.qualcomm.com/qmt/technology/index.html und www.electronicstalk.com/news/dal/dal118,html). Ein bistabiles MEMS-Display im Sinne der Erfindung ist insbesondere ein elektrostatisch einstellbares bistabiles MEMS-Display.

Einzelheiten zu cholesterischen Displays bzw. zu geeigneten cholesterischen Displays können z.B. dem unter der Internetadresse
www.kentdisplays.com/tech/papers/2003/09-03-IDRC-
Bistable%20Reflective%20Cholesteric%20Displays.pdf
hinterlegten Artikel "Bistable Reflective Cholesteric Displays" (incorporated by reference) entnommen werden.

Einzelheiten zu electrophoretischen Displays bzw. zu geeigneten electrophoretischen Displays können z.B. dem unter der Internetadresse
people.ccmr.cornell.edu/~cober/mse542/page2/files/Herz%20Electrophoretics.pdf hinterlegten Artikel "Electrophoretic Display Technology: The beginnings, the improvements, and a future in flexible electronics" (incorporated by reference) entnommen werden. Weitere Einzelheiten zu electrophoretischen Displays können z.B. der Internetadresse
www.testtickerde/pcpro/praxis/peripherie/article200203195023.aspx entnommen werden. Electrophoretischen Displays können auf dünnen flexiblen Plastikträgern angeordnet sein.

In einer Ausgestaltung der Erfindung umfasst die Displayanordnung keine unter dem Display angeordnete Lichtquelle zur aktiven Emission von Licht.

Vorgenannte Aufgabe wird zudem durch einen Kraftfahrzeugschlüssel zum Ver- und/oder Entriegeln einer Tür eines Kraftfahrzeuges und/oder zum Betrieb des Kraftfahrzeuges gelöst, wobei der Kraftfahrzeugschlüssel eine Displayanordnung zur Darstellung einer das Kraftfahrzeug betreffenden Information und/oder zur Darstellung der Funktion eines Bedienelementes des Kraftfahrzeugschlüssels umfasst, und wobei die Displayanordnung zumindest ein quasistatisches reflektives Display umfasst. Auf diese Weise kann aufgrund des äußerst geringen bzw. nicht vorhandenen Energiebedarfs des Displays bei einer statischen. Anzeige von Informationen ein besonders großes Display verwendet werden, so dass die dargestellten Informationen gut ablesbar sind bzw. so dass viele Informationen darstellbar sind. Ein quasistatisches reflektives Display kann als ein MEMS-Display, als ein cholesterisches Display und/oder als ein electrophoretisches Display implementiert werden.

Ein reflektives Display im Sinne der Erfindung ist insbesondere ein Display ohne eine zugeordnete Lichtquelle. Ein reflektives Display im Sinne der Erfindung ist insbesondere ein Display, das bei Tageslicht ohne eine zusätzliche Lichtquelle (gut) ablesbar ist. Ein quasistatisches Display im Sinne der Erfindung ist insbesondere ein Display, dessen Anzeigegehalt zwar veränderbar ist, das aber bei unverändertem Anzeigegehatt keine Energie oder keine nennenswerte bzw. fast keine Energie verbraucht. Ein Display verbraucht bei unverändertem Anzeigegehalt insbesondere keine nennenswerte Energie, wenn die Energie eines Akkus in einem (üblichen) Kraftfahrzeugschlüssel ausreicht, die Anzeige viele bzw. mehrere hundert Stunden aufrecht zu erhalten. Ein Display verbraucht bei unverändertem Anzeigegehalt insbesondere keine nennenswerte Energie, wenn der Energieverbrauch erheblich geringer ist als der Energieverbrauch für eine Ver- bzw. Entriegelungsfunktion bei üblicher Benutzung des Kraftfahrzeugschlüssels.

In einer Ausgestaltung der Erfindung ist das Display pigmentfrei. In einer weiteren Ausgestaltung der Erfindung ist das Display bistabil. Ein bistabiles Display im Sinne der Erfindung ist insbesondere ein Display mit zwei voneinander verschiedenen stabilen Zuständen. Ein stabiler Zustand in diesem Sinne ist ein Zustand, in dem das Display keine Energie oder keine nennenswerte bzw. fast keine Energie verbraucht. Energie ist dagegen insbesondere beim Übergang von einem Zustand in den anderen notwendig.

Vorgenannte Aufgabe wird zudem durch einen Kraftfahrzeugschlüssel zum Ver-und/oder Entriegeln einer Tür eines Kraftfahrzeuges und/oder zum Betrieb des Kraftfahrzeuges gelöst; wobei der Kraftfahrzeugschlüssel eine Displayanordnung zur Darstellung einer das Kraftfahrzeug betreffenden Information und/oder zur Darstellung der Funktion eines Bedienelementes des Kraftfahrzeugschlüssels umfasst, und wobei die Displayanordnung zumindest ein bistabiles Display umfasst. Auf diese Weise kann aufgrund des äußerst geringen bzw. nicht vorhandenen Energiebedarfs des Displays bei einer statischen Anzeige von Informationen ein besonders großes Display verwendet werden, so dass die dargestellten Informationen gut ablesbar sind bzw. so dass viele Informationen darstellbar sind.

Vorgenannte Displays sind insbesondere Matrixdisplays. Vorgenannte Displays sind insbesondere Displays mit unabhängig von einander ansteuerbaren Pixeln, so dass veränderliche bzw. frei konfigurierbare Bilder (engl: images) darstellbar sind.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel eines Kraftfahrzäugschlüssels zum Ver- und/oder Entriegeln einer Tür eines Kraftfahrzeuges und/oder zum Betrieb des Kraftfahrzeuges in einer Prinzipdarstellung;
- Fig. 2: eine perspektivische Ansicht eines weiteren Ausführungsbeispiels eines Kraftfahrzeugschlüssels zum Ver- und/oder Entriegeln der Tür des Kraftfahrzeuges und/oder zum Betrieb des Kraftfahrzeuges;
- Fig. 3: eine perspektivische Ansicht eines weiteren Ausführungsbeispiels eines Kraftfahrzeugschlüssels zum Ver- und/oder Entriegeln der Tür des Kraftfahrzeuges und/oder zum Betrieb des Kraftfahrzeuges;
- Fig.4: ein Ausführungsbeispiel einer Displayanordnung;
- Fig. 5: ein Ausführungsbeispiel eines electrophoretischen Displays;
- Fig. 6A: ein Ausführungsbeispiel eines bistabilen MEMS-Displays in einem als "open state" bezeichneten Zustand; und
- Fig. 6B: das bistabile MEMS-Display gemäß Fig. 6A in einem als "collapsed state" bezeichneten Zustand.

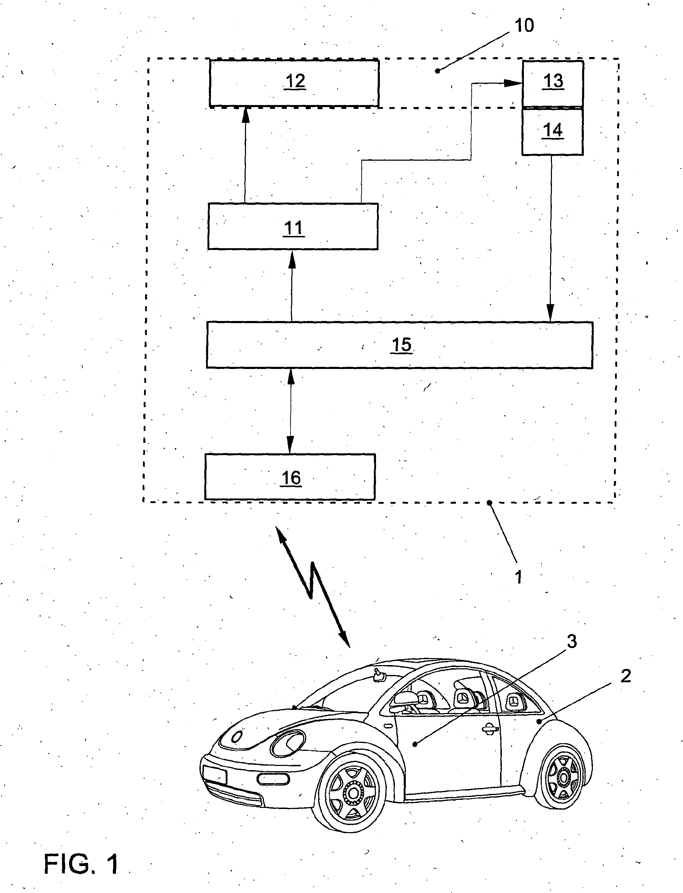

Fig. 1 zeigt ein Ausführungsbeispiel eines Kraftfahrzeugschlüssels 1 zum Ver- und/oder Entriegeln einer Tür 3 eines Kraftfahrzeuges 2 und/oder zum Betrieb des Kraftfahrzeuges 2 in einer Prinzipdarstellung. Der Kraftfahrzeugschlüssel 1 umfasst eine Displayanordnung 10 zur Darstellung einer das Kraftfahrzeug 2 betreffenden Information und/oder zur Darstellung der Funktion eines Bedienelementes 14 des Kraftfahrzeugschlüssels 1. Eine das Kraftfahrzeug 2 betreffende Informationen kann die Tankfüllung, der Schließzustand des Kraftfahrzeuges 2, die verbleibende Reichweite des Kraftfahrzeuges 2, der Status einer Alarmanlage des Kraftfahrzeuges 2, der Standort des Kraftfahrzeuges 2 (absolut oder in Relation zum Kraftfahrzeug- .. schlüssel 1), das Nummernschild des Kraftfahrzeuges 2, der Hersteller des Kraftfahrzeuges 2 und/oder das Modell des Kraftfahrzeuges 2 sein.

Die Displayanordnung 10 umfasst zwei quasistatische reflektive bzw. bistabile Displays 12 und 13. Ein reflektives Display in diesem Sinne ist insbesondere ein Display, das bei Tageslicht ohne eine zusätzliche Lichtquelle ablesbar ist. Ein quasistatisches Display in diesem Sinne ist insbesondere ein Display, dessen Anzeigegehalt zwar veränderbar ist, das aber bei unverändertem Anzeigegehalt keine Energie oder keine nennenswerte bzw. fast keine Energie verbraucht. Ein Display verbraucht bei unverändertem Anzeigegehalt insbesondere keine nennenswerte Energie, wenn die Energie eines Akkus des Kraftfährzeugschlüssels 1 ausreicht, die Anzeige viele bzw. mehrere hundert Stunden aufrecht zu erhalten. Zum Schutz der Displayanordnung 10 bzw. der Displays 12 und 13 kann eine Schutzschicht oder ein (Schiebe-)Deckel (engl: sliding cover) vorgesehen sein.

Der Displayanordnung 10 ist ein Anzeigemodul 11 zugeordnet, mittels dessen die Displays 12 und 13 derart ansteuerbar sind, dass sie die gewünschten Informationen anzeigen. Das Anzeigemodul 11 kann auch Teil der Displayanordnung 10 sein.

Der Kraftfahrzeugschlüssel 1 umfasst zudem ein Schlüsselmodul 15 sowie eine, insbesondere drahtlose, Schnittstelle 16 zum Kraftfahrzeug 2 zur Implementierung von Funktionen wie Ver-und/oder Entriegeln des Kraftfahrzeuges 2 und/oder autorisiertem Betrieb des Kraftfahrzeuges 2. Der Kraftfahrzeugschlüssel 1 kann zusätzlich ein, z.B. GPS-basiertes, Ortungs- oder Navigationssystem und/oder ein RFID-Modul umfassen.

Der Kraftfahrzeugschlüssel 1 kann darüber hinaus eine Energieversorgung mit einer oder mehreren Batterien und/oder mit einem oder mehreren Akkus umfassen. Es kann vorgesehen sein, dass die Energieversorgung für ein Ortungs- oder Navigationssystem unabhängig von der Energieversorgung für das Schlüsselmodul 15 und die Schnittstelle 16 sowie für das Anzeigemodul 11 ist. Es kann auch ein System zur Erzeugung elektrischer Energie vorgesehen sein. Ein solches System kann z.B. Wärme, Sonnenlicht oder kinetische Energie in elektrische Energie wandeln. Es kann auch eine (insbesondere drahtlose) Energieübertragungsschnittstelle zu Übertragung von elektrischer Energie von dem Kraftfahrzeug 2 zu dem Kraftfahrzeugschlüssel 1 vorgesehen sein.

Über die Schnittstelle 16 oder eine weitere Schnittelle werden die zur Anzeige mittels der Displayanordnung 10 vorgesehenen Informationen übertragen. Die Übertragung kann z.B. über eine elektrische Verbindung, wie z.B. mittels USB oder Firewire, oder drahtlos, wie z.B. mittels Bluetooth oder RF, erfolgen. Es ist insbesondere vorgesehen, dass die zur Übertragung vorgesehenen Informationen übertragen werden, wenn der Motor des Kraftfahrzeuges 2 ausgeschaltet wird.

Der Kraftfahrzeugschlüssel 1 kann eine Zusatzbeleuchtung zur Beleuchtung der Displayanordnung 10 bei Dunkelheit sowie einen Schalter o.ä. zum Ein- und Ausschalten der Zusatzbeleuchtung umfassen.

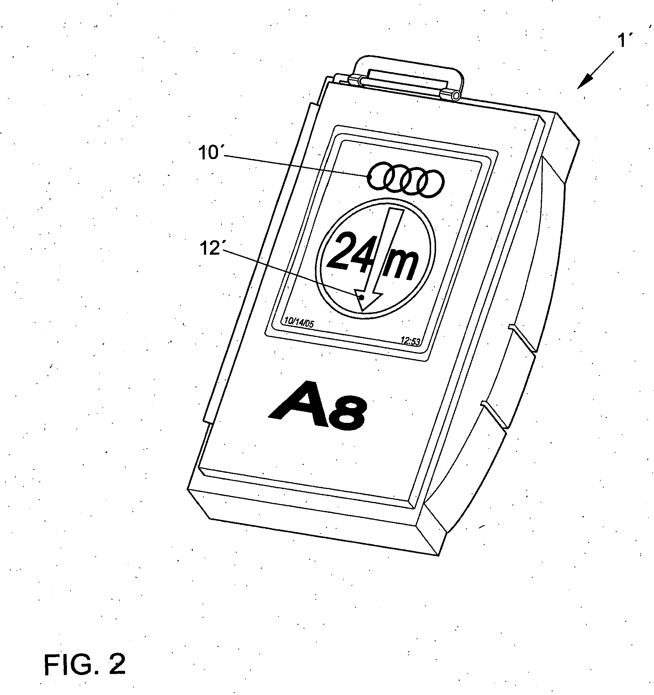

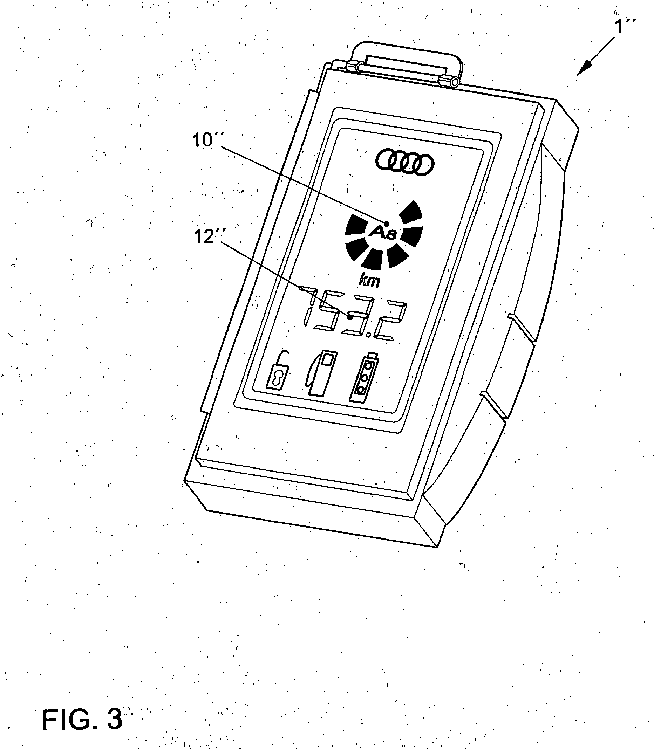

Fig. 2 und Fig. 3 zeigen perspektivische Ansichten weiterer Ausführungsbeispiele eines Kraftfahrzeugschlüssels 1' bzw. 1" zum Ver- und/oder Entriegeln der Tür eines Kraftfahrzeuges und/oder zum Betrieb des Kraftfahrzeuges. Dabei bezeichnen Bezugszeichen 10' bzw. 10" Displayanordnungen mit jeweils einem Display 12' bzw. 12".

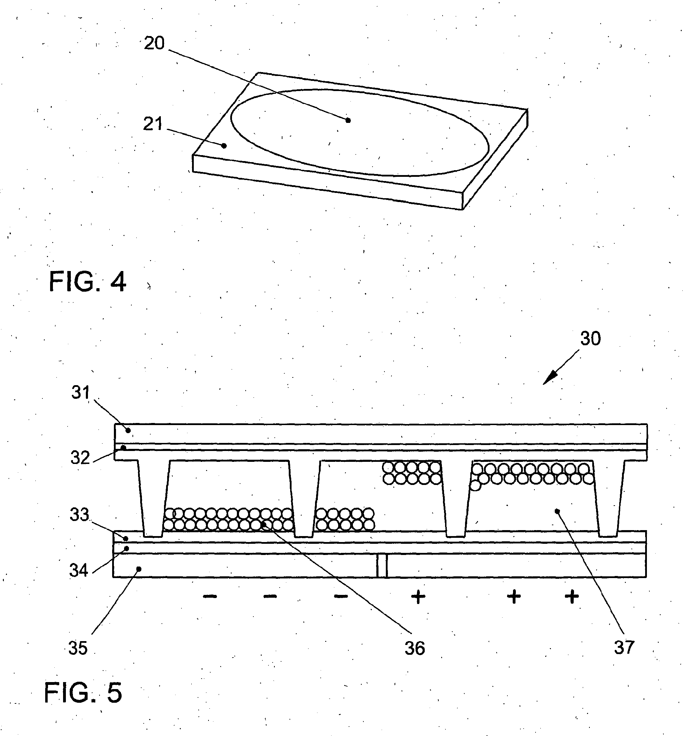

Fig. 4 zeigt ein Ausführungsbeispiel einer Displayanordnung. Die Displayanordnung umfasst ein Display 20. und eine über dem Display 20 anordnete Maskierungsschicht vorgesehen, die die rechteckige Anzeigefläche des Displays 20 auf ein Oval reduziert.

Ein Display 12, 13,12', 12" bzw. 20 kann als ein bistabiles MEMS-Display, als ein chofesterisches Display und/oder als ein electrophoretisches Display implementiert bzw. ausgestaltet sein. Einzelheiten zu electrophoretischen Displays bzw. zu geeigneten electrophoretischen Displays können z.B. dem unter der Internetadresse
people.ccmr.cornell.edu/~cober/mse542/page2/files/Herz%20Electrophoretics.pdf hinterlegten Artikel "Electrophoretic Display Technology: The beginnings, the improvements, and a future in flexible electronics" (incorporated by reference) entnommen werden. Weitere Einzelheiten zu electrophoretischen Displays können z.B. der Internetadresse
www.testticker.de/pcpro/praxis/peripherie/article200203195023.aspx entnommen werden. Fig. 5 zeigt ein Ausführungsbeispiel eines electrophoretischen Displays 30. Dabei bezeichnet Bezugszeichen 31 eine PET-Schutzschicht, unter der ein transparenter Leiter 32 angeordnet ist. Unter dem transparenten Leiter 32 sind durch eine Versiegelungsschicht 33 versiegelte Kammern mit einer dielektrischen Flüssigkeit *(engl:* fluid) 37 mit Ladungspartikeln *(engl:* charged particles) 36 angeordnet. Die Versiegelungsschicht 33 ist mittels einer Klebeschicht 34 mit einem gemusterten Leiter (*engl:* patterned conductor) 35 verbunden. Mittels einer Ladung des gemusterten Leiters 35 kann die Lage der Ladungspartikel 36 in ihrer Kammer verändert werden.

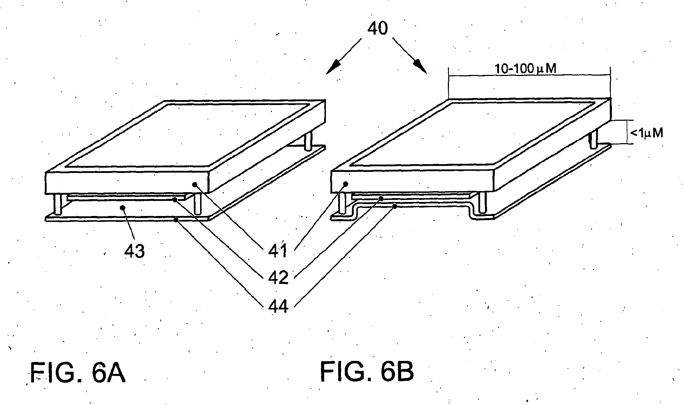

Ein geeignetes bistabiles MEMS-Display ist z.B. in der unter der Internetadresse
www.utdallas.edu/~jblee/EE7382/31%20MEMS%20dispiays.pdf hinterlegten Präsentation "EE 7382 Introduction to MEMS" auf Seite 22 (incorporated by reference) offenbart. Geeignete bistabile MEMS-Displays können z:B. von der Firma Qualcomm bezogen werden (vgl. z.B. die Internetadressen www.qualcomm.com/qmt/technology/index.html und www.electronicstalk.com/news/dal/dal118.html). Ein bistabiles MEMS-Display ist insbesondere ein elektrostatisch einstellbares bistabiles MEMS-Display. Fig. 6A zeigt ein Ausführungsbeispiel eines Pixels 40 eines bistabilen MEMS-Displays in einem als "open state" bezeichneten Zustand und Fig. 6B zeigt das Pixel 40 des bistabilen MEMS-Displays in einem als "collapsed state" bezeichneten Zustand. Das Pixel 40 des bistabilen MEMS-Displays umfasst ein Glassubstrat 41, unter dem eine Elektrode 42 angeordnet ist. Unterhalb der Elektrode ist eine Membran 44 angeordnet. In dem als "open state" bezeichneten Zustand befindet sich ein Luftspalt 43 zwischen der Elektrode 42 und der Membran 44. Durch Anlegen einer geeigneten Spannung überbrückt die Membran 44 den Luftspalt 43 ("collapsed state").

Einzelheiten zu cholesterischen Displays bzw. zu geeigneten cholesterischen Displays können z.B. dem unter der Internetadresse
www.kentdisplays.com/tech/papers/2003/09-03-IDRC-
Bistable%20Reflective%20Cholesteric%20Displays.pdf
hinterlegten Artikel "Bistable Reflective Cholesteric Displays" (incorporated by reference) entnommen werden.

Die Elemente und Schichten in den Figuren sind unter Berücksichtigung von Einfachheit und Klarheit und nicht notwendigerweise maßstabsgetreu gezeichnet. So sind z.B. die Größenordnungen einiger Elemente bzw. Schichten übertrieben gegenüber anderen Elementen bzw. Schichten dargestellt, um das Verständnis der Ausführungsbeispiele der vorliegenden Erfindung zu verbessern.

### Bezugszeichenliste

- 1, 1', 1": Kraftfahrzeugschlüssel
- 2: Kraftfahrzeug
- 3: Tür
- 10, 10', 10": Displayanordnung
- 11: Anzeigemodul
- 12, 13, 12', 12", 20: Display
- 14: Bedienelement
- 15: Schlüsselmodul
- 16: Schnittstelle
- 21: Maskierungsschicht
- 30: electrophoretisches Display
- 31: PET-Schutzschicht
- 32: transparenter Leiter
- 33: Versiegelungsschicht
- 34: Klebeschicht
- 35: gemusterter Leiter
- 36: Ladungspartikel
- 37: dielektrische Flüssigkeit
- 40: Pixel eines bistabilen MEMS-Displays
- 41: Glassubstrat
- 42: Elektrode
- 43: Luftspalt
- 44: Membran

## Patentansprüche

1. Kraftfahrzeugschlüssel (1) zum Ver- oder Entriegeln einer Tür (3) eines Kraftfahrzeuges (2) und/oder zum Betrieb des Kraftfahrzeuges (2), wobei der Kraftfahrzeugschlüssel (1) eine Displayanordnung (10) zur Darstellung einer das Kraftfahrzeug (1) betreffenden Information oder zur Darstellung der Funktion eines Bedienelementes (14) des Kraftfahrzeugschlüssels (1) umfasst, **dadurch gekennzeichnet, dass** die Displayanordnung (10) zumindest ein bistabiles MEMS-Display (12), ein cholesterisches Display (12), ein electrophoretisches Display (12), ein quasistatisches reflektives Display (12) und/oder ein bistabiles Display (12) umfasst.

2. Vorrichtung nach Anspruch 1, **dadurch gekennzeichnet, dass** die Displayanordnung keine unter dem Display (12) angeordnete oder in das Display (12) integrierte Lichtquelle zur aktiven Emission von Licht umfasst.

3. Vorrichtung nach Anspruch 1 oder 2, **dadurch gekennzeichnet, dass** das Display (12) pigmentfrei ist.
